# EUROPEAN PATENT SPECIFICATION

(11) **EP 2 155 505 B1**
(45) Date of publication and mention of the grant of the patent: **09.01.2013**
(21) Application number: 07719261.5
(22) Date of filing: 13.04.2007
(51) Int. Cl.: B60C 11/03, B60C 19/00

(54) **MOTORCYCLE TIRES TO IMPROVE PERFORMANCE AND WEAR RESISTANCE OF MOTORCYCLE TIRES**
MOTORRADREIFEN ZUR VERBESSERUNG DER LEISTUNG UND VERSCHLEISSFESTIGKEIT VON MOTORRADREIFEN
PNEUMATIQUES DE MOTOCYCLETTES POUR AMÉLIORER LA PERFORMANCE ET LA RÉSISTANCE À L'USURE DE PNEUMATIQUES DE MOTOCYCLETTES

(43) Date of publication of application: 24.02.2010
(60) Divisional application: 11186400.5
(73) Proprietor: Pirelli Tyre S.P.A., 20126 Milan (IT)
(72) Inventor: BARBOZA, Samuel, Santana, 09111-000 Santo André - Sp (BR); CRUZ, Vinicius, Barbosa, 09111-000 Santo André - Sp (BR)
(74) Representative: Lasca, Sergio
(86) International application number: PCT/BR2007/000093
(87) International publication number: WO 2008/124899

(56) References cited:
- EP-A- 1 288 023
- EP-A- 1 508 456
- WO-A-2005/005169
- JP-A- 2001 039 105
- US-A1- 2002 026 971

## Description

### Field of invention

This invention refers to pairs of front and rear tires, each pair being respectively assembled on one front wheel and on one rear wheel of a motorcycle, each of such pairs of tires comprising one specific tread provided with a plurality of grooves.

### Description of the state of the art

In the field of motorcycle tires and, in particular, in the field of tires, for the so-called low CC motorcycles, one of the hardest problems to be solved by tire manufacturers is to improve performance as regards mileage output, both on wet and dry ground, keeping uniform wearing and traction characteristics of the tires, while finding the best possible compromise between these characteristics.

As it is well known by anyone skilled in the art, this is a problem particularly hard to be solved as these characteristics conflict to each other, because the performance on wet ground is largely related to the presence, on the tread, of a sufficient number of grooves that are capable of draining the water present on the area where the tires touch the ground, while the mileage output, the uniform wearing and the traction characteristics of the tires - to the contrary - would be beneficially influenced by the reduction in the number of these grooves.

This problem is additionally worsened by the fact that the performance on wet ground must be assured both when running along straight sections and along a curve.

Accordingly, there is a major difference in these two running conditions, when on wet ground: in straight sections, the contact of the rear tire with the ground occurs along a relatively dry strip, the water from which was drained by the front tire. On the other hand, on curved sections, such tires run through different paths, thus resulting in both the rear and front tire touching the wet ground. Considering that the vehicle tilts when going on a curve, it results that the area of contact of both tires is no longer centered in the equatorial region of the tread, but is displaced to one of the sides to a higher or lower extent, depending on the radius of the curve and speed of the vehicle. Thus, the design of the tread must consider such conditions so as to insure efficient draining, keeping adherence to the paving, a condition that is indispensable for the handling of the vehicle.

Some patent documents mentioned below reflect the several attempts to solve the problem of obtaining stability without compromising the wearing characteristics of the tires.

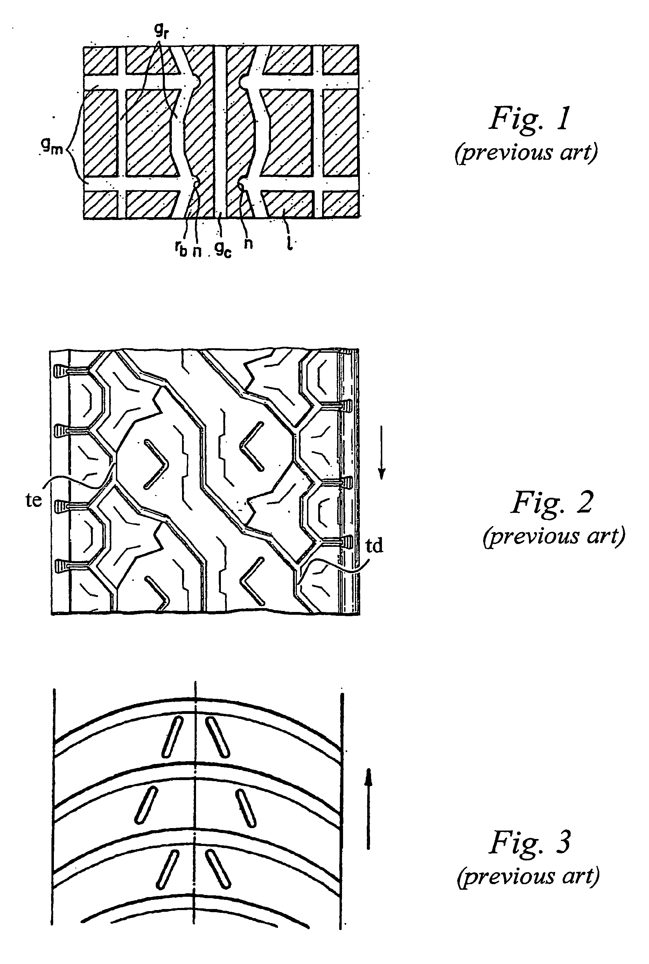

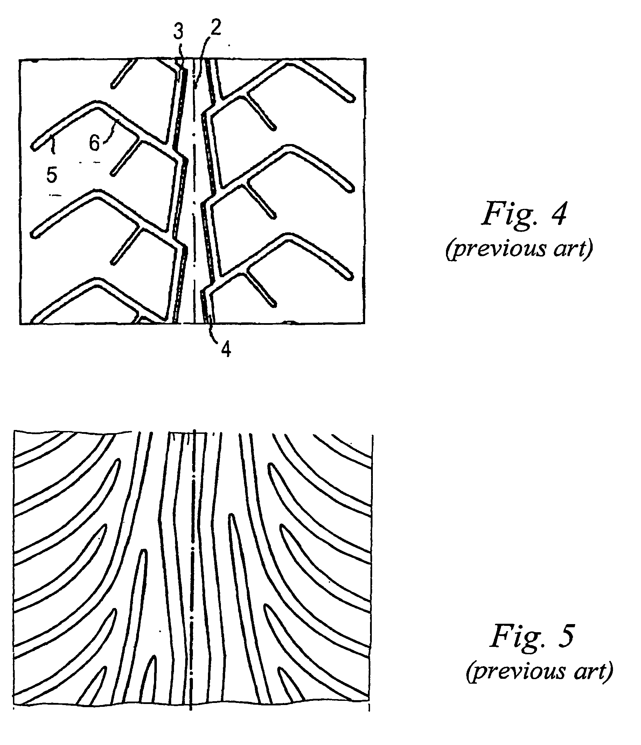

US Patent 3,730,245 *"Pneumatic tire for high-speed motorcycle"* (May 1973) shows, in its figure 5A, reproduced in this application as Fig. 1, a tread provided with a straight circumferential groove g**_{c}** aligned with the center of equatorial plane, sided on the left and on the right by circumferential grooves **g**ᵣ, the former making sequences of near-elliptic sections and the latter, external, straight in format and parallel to the groove **g**_{c}. The drawing further comprises a series of transversal grooves **g**ₘ uniformly spaced and perpendicular to groove **g**_{c}, that is, to the direction of movement of the tire. This tread shows to be adequate for dry floor, however on wet floor the draining is poor, due to the direction of the grooves **g**ₘ.

US Patent 4,364,426 *"Motorcycle tire tread"* (December, 1982) shows the drawing of a tread, reproduced in Fig. 2 of this application, comprising a plurality of grooves substantially transversal and parallel, extending between the right and left side areas of such tread, in which circumferential grooves are provided in zigzag, the external vertices of which are connected to water draining channels. The fact that such grooves keep substantially the same direction throughout their length (between the right and left areas of the tread) results in a material difference in water draining between the center and each of the borders. So, considering the running direction DR indicated in the figure, the water will be more efficiently drained in **t**ₑ section, and less efficiently in **t**_{d} section, and vice-versa in case the running direction is opposite to the indicated one. Moreover, this application does not specify whether it refers to the front or rear tire, which should have distinct characteristics due to their functions being different.

US Patent 6,276,415 *"Pneumatic radial tire for motorcycle"* (August, 2001) presents a drawing - reproduced in Fig. 3 - in which transversal grooves are provided, symmetrically positioned in relation to the central line of the tread, so as to avoid the difference in water draining indicated in the subject matter of the prior patent. However, the drawing now presented results in large rubber areas, which adversely affects performance. Moreover, the treads described in that patent only refer to front tires, and it says nothing about rear tires.

Patent document JP 2000043509 *"Pneumatic tire for motorcycle"* shows a drawing - reproduced in Fig. 4 - comprising two circumferential grooves 3 and 4 in zigzag on both sides of equator line 2, such grooves communicating with transversal grooves 6 positioned at an angle with such axis, extending from the central area to the intermediate area of the tread, having in the edge a groove 5 in an approximate angle of 100° with the prior one and extending from the intermediate area to the side area of the tread without, however, reaching its border. In a position approximately central to groove 6 and at a right angle with it, there is a secondary groove that is narrower and harder than groove 5. This document does not indicate whether the tread shown relates to the front or rear tire, and, in both cases, the adherence in curves is adversely affected due to the near total absence, in the side bands, of water draining grooves.

US Patent Application 2005/0115653 *"Pneumatic tire for motorcycle"* shows a drawing - reproduced in Fig. 5 - that comprises a pair of circumferential zigzag grooves in the central area of the tire and a plurality of diagonal curved grooves, extending between this central area and the sides of the tread. The application does not inform whether it refers to the front or rear tire and, in the latter case, there will be considerable wearing due to the high value of the "sea/land" ratio in the central area.

PCT Patent Application no. WO 2005/005169 describes a pair of pneumatic tires for motorcycles according to the preamble of claim 1 wherein the tread band of the front tire comprises:
a) at least one circumferential groove extending at the equatorial plane of the front tire within a central zone extending astride said equatorial plane;
b) a plurality of transversal grooves having an axially inner end lying within the central zone of the tread band and alternately extending from said central zone towards axially opposite shoulder zones of the tread band external to said central zone, at least some of said transversal grooves being connected to said at least one circumferential groove;
and wherein the tread band of the rear tire comprises an area defining a substantially null sea/land ratio within a central zone of the tread band extending astride the equatorial plane of the rear tire and having a width of from about 5% to about 30% of the axial development of the tread band.

### Purposes of the invention

In view of the foregoing, this invention has as purpose to provide tires with optimized characteristics of adherence to the pavement, both on dry and wet floors.

Another purpose consists of providing the tires with higher resistance to wearing.

Another purpose consists of providing tires that permit to easily check the level of wearing on the tread.

### Summary of the invention

According to this invention, the Applicant noticed that the problem of improving the mileage output performance both on wet and dry floors, uniform wearing and traction characteristics for motorcycle tires may be solved by an approach based on a general outlook, simultaneously considering both front and rear tires.

From this point of view, the Applicant found out that the problem mentioned above can be solved by a joint combination of a front tire and a rear tire having the features of claim 1, each of them having a tread pattern provided with specifically designed characteristics as regards the dimensions and positioning of the grooves. These patterns on the tread take into consideration the specific functions of each tire in the vehicle, once the main function of the front tire is to provide the directional control, and the rear tire is responsible for its driving, besides bearing most of the weight.

Taking into consideration the applications to which they are intended, the tires presented in this invention comprise three preferred types of embodiment, namely, tires for urban use on paved floor, sportive high-speed tires and "endurance" tires for unpaved floors.

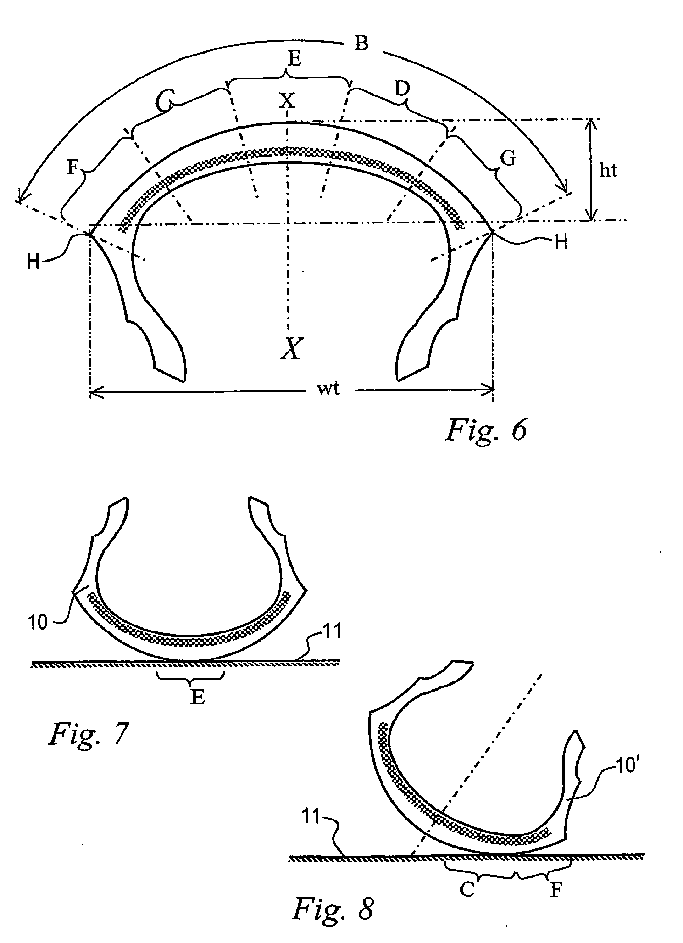

In order to better understand the following matter, some definitions are presented below, taking as reference Fig. 6, which represents a considerably simplified cross-section view of a tire:
- tread, referred with letter B in the figure, is the portion of the tire intended to touch the paving, either in straight paths or in curves. The surface of the tread is provided with a plurality of low-relief grooves having, among other functions, that of draining water from the ground in contact with the tire. As shown by Fig. 6, the tread is divided into five parallel areas, that will be described below;
- axial development is the tread width when developed on a flat surface, that is, the distance between H-H borders measured along the tire surface;
- equatorial plane is the plane parallel to the main plane of the tire, dividing it into two symmetric halves. The intersection of this plane with the external surface of the tire defines the X-X longitudinal axis of the tread. The direction perpendicular to this axis, that is, the one which goes from one to the other border H of the tread is defined as the "axial" direction.
- Central area E of the tread is the circumferential strip that extends astride the X-X longitudinal axis, occupying, in this invention, from 10% to 25% of the axial development;
- intermediate side areas C and D in the figure, are strips that extend in parallel to X-X axis along the whole circumference of the tire, in both sides of the so-called central area E, occupying, in this invention, from 20% to 30% of the axial development of the tread;
- projection areas F and G in the figure are strips that extend in parallel to X-X axis along the whole circumference of the tire, between the limits of the intermediate side areas and the borders H of the tread, occupying, in this invention, from 10% to 20% of the axial development of the tread;
- "sea/land" ratio is the ratio between the area occupied by the grooves or channels provided in a certain portion of the tread and the total area of such portion;

The way in which the tire touches the floor is a result of the path of the vehicle. In a straight path, the situation is as shown in Fig. 7, the contact of tire 10 with paving 11 occurring mainly or exclusively along the central area E. In a curve, the motorcycle tilts as shown in Fig. 8, and the contact of tire 10' with the paving now occurs along areas C and F, and, in steeper inclinations - corresponding to sharper curves or higher speeds - only area F will touch paving 11.

When running on wet floor, it is essential to obtain good adherence of the tires in curved paths, so as to assure the stability of the vehicle. Such purpose is reached by the air of tires of this invention, causing the sea/land ratio in intermediate side areas to be higher than sea/land ratios in the central area and in projection areas, both in front and rear tires.

Advantageously, this characteristic of the intermediate side areas, axially opposed, improves the water draining capacity of the tires, when they move along a curve, that is, when the tires are tilted to provide the leaning impulse necessary to counterbalance the centrifuge power.

According to another characteristic of the invention, in rear tires the sea/land ratio in central area E is substantially below that of the other areas of the tread.

According to a preferred characteristic of the invention, the rear tire presents higher axial development of the tread, that is, the tread is wider than in the front tire.

According to a preferred characteristic of the invention, the grooves that make the drawings of the tread comprise, at least, one substantially straight section. Such grooves may further comprise two or more substantially straight sections engaged among them.

According to a further preferred characteristic of the invention, the grooves that make the drawings of the treads comprise a plurality of transversal grooves laid in angle in relation to the X-X axis, that is, to the running direction DR of the tire.

According to a preferred characteristic of the invention, such transversal grooves comprise one first set of transversal grooves, alternately positioned in relation to one and the other from the X-X longitudinal axis, and directed in an angle in relation to it, and such grooves extending to the external borders H of the tread, where they end. Preferably, the portion of the grooves of such first set, located in the intermediate side areas, defines with the running direction of the front tire an angle from about 50° to about 75° and, even more preferably, from about 60° to about 70°.

According to a preferred characteristic of the invention, the grooves comprised in that first set present a progressive increase in its cross-section when approaching such external borders H.

According to a preferred characteristic of the invention, such increase is provided by the increase in the width of the grooves towards the borders.

In a first and second preferred embodiment, the tread of front tires comprises at least one circumferential groove extending in the equatorial plane of the front tire within such central area E, and the internal ends of the grooves comprised in said first set are joined to such circumferential groove.

According to a preferred characteristic of the invention, in those first and second embodiments, the tread of the front and rear tires is provided with a second set of intermediate grooves between the grooves of the first set, equally positioned in both sides of the X-X longitudinal axis. Preferably, the first end of the grooves of that second set is located at about the borderline between the central area and the intermediate side area, and the second end is located in the projection area, without reaching the border of the tread.

According to a preferred characteristic of the invention, in those first and second embodiments, a third set of transversal grooves is provided, angularly laid out and alternately positioned in the longitudinal direction of the tread, and such grooves being fully contained in projection areas F and G.

Advantageously, those second and third sets of additional transversal grooves exercise the double function of increasing the water draining capacity of the tread, while optimizing its regularity of wearing as it helps reach proper balance between the area occupied by the grooves ("sea") and the area occupied by the rubber portions of the tread.

According to a preferred characteristic of the invention, the transversal grooves of the first and second sets are provided with branched grooves that form, with the running direction (DR) of the tire - or with X-X axis - angles comprised between about 5° and about 25°.

According to the first preferred embodiment, such branched grooves are bridges connecting grooves between the transversal grooves of those first and second sets. Thus, it is advantageously possible to improve the water draining capacity of the front tire so that the rear tire moves on a substantially water-free track, which can be attributed to the action of the water draining exercised both by the circumferential groove and the plurality of such connection grooves and, further, by the plurality of transversal grooves the end of which is located within the central area of the tread.

Due to this advantageous technical effect, provided by the front tire, the tread of the rear tire may be properly designed to optimize its wear resistance and traction performance through the provision of a sea/land ratio substantially minimized in the central area of the tread, extending astride the equatorial plane of the rear tire, and with a specific axial development.

In addition, at least one circumferential groove extending in the equatorial plane of the front tire, in the first and second preferred embodiments of the invention, also acts as a folding element during the running of the tire, thus reaching the additional advantageous technical effect of increasing the running stability of the front tire.

Consequently, the pairs of tires of the first and second preferred embodiments of the invention permit to reach the following important advantages in relation to the tires of the prior art, for the same kind of use:
a) An improvement in the front tire's capacity of draining water under the contact patch with the floor, so as to better control any hydroplaning phenomena;
b) An improvement in front tire's driving stability on straight paths;
c) An improvement in the rear tire's uniformity of wear with a substantial elimination of those phenomena of irregular and non-homogeneous wearing of the rubber portion of the tread, referred to in the art by the expression "detachment from the floor".
d) An improvement in the wear resistance of the rear tire, increasing the mileage output of the tire.

According to another characteristic of the invention, in rear tires, the internal portion of at least some grooves, that extend in the direction from the projection area to the center, surpasses the X-X longitudinal axis in the central area of the tread. Advantageously, this feature permits to visually check the degree of wearing of the tread, besides contributing to drain the water present in the contact patch of the tire with the floor.

According to a preferred embodiment of this invention, the rear tire also comprises intermediate transversal grooves formed in the tread in both sides of X-X axis, intercalated between the grooves mentioned above, and with an internal end located approximately at the borderline between the central area and the intermediate side area, the second end being located in the projection area, without reaching the outer edge of the tread.

As it occurs with the front tire, these additional grooves advantageously exercise the double function of increasing the water draining capacity of the tread, especially when the rear tire moves along a curve, while optimizing its wearing regularity as it helps reach proper balance between the area occupied by the grooves and the area occupied by the rubber portions of the tread.

In a third preferred embodiment of the invention, the drawings of treads of front and rear tires are similar. These drawings comprise a fourth set of transversal grooves laid out at an angle and alternately positioned along the tread, such grooves having a first internal end, located on the intermediate side area and the external end ending on border H of the tread. Further in accordance with such embodiment, the tread comprises a fifth set of grooves, intercalated between the grooves of said fourth set and substantially parallel to them having a first end located in the intermediate side area C or D, crossing the central area E and the intermediate side area of the opposed side and ending on projection area F or G, without reaching its external border. Preferably, such grooves define with X-X axis of the tread an angle from about 50° to about 75° and, more preferably, from about 60° to about 70°.

Additionally, in the tread of the tires under the third preferred embodiment, such transversal grooves are interconnected by bridging grooves, substantially positioned in intermediate side areas C and D and forming with X-X axis of the tread an angle comprised between 10° and 30°. Preferably, such angles are approximately complementary to the angles formed between such transversal grooves and the X-X axis.

Thus, it is advantageously possible to improve the water draining capacity of the rear tire in curved paths, when this tire is not aligned with the front tire.

### Description of figures

Other characteristics and advantages will be more easily apparent by the following description of preferred embodiments of the invention, provided on an illustrating and not limiting basis, reference being made to the corresponding drawings, in which:
Figures 1 to 5 show several treads configured according to the previous art.
Figure 6 shows a cross-section of the tire, highly simplified, indicating the areas in which the tread is divided.
Figures 7 and 8 show the contact of the tire with the floor in the situation of a straight line path and in a curved path.
Figures 9 and 10 show the treads, respectively, of the front and rear tire in a first preferred embodiment of the invention.
Figures 11 and 12 show the treads, respectively, of the front and rear tire in a second preferred embodiment of the invention.

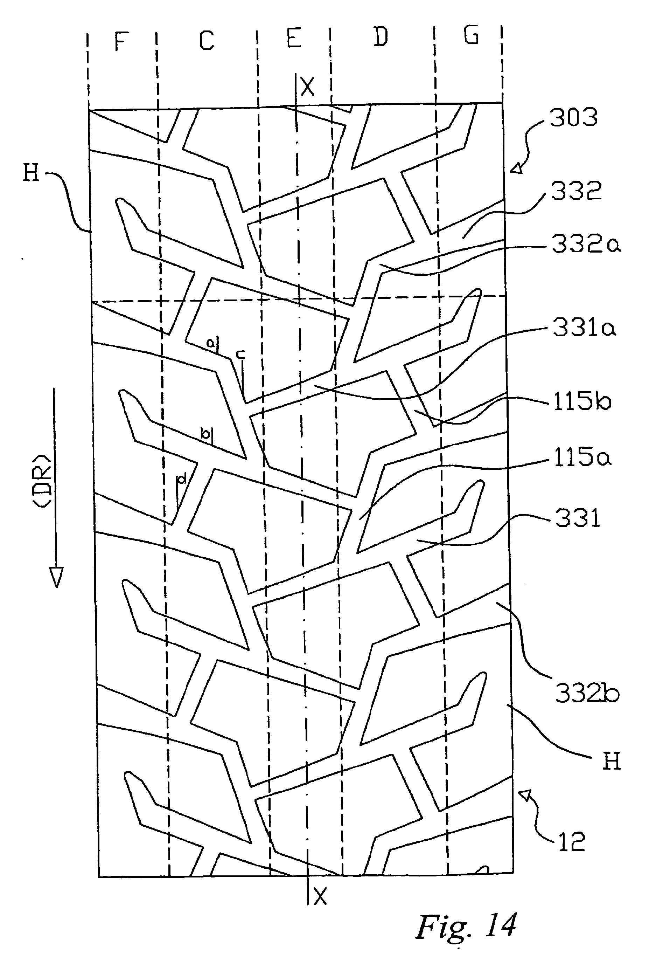

Figures 13 and 14 show the treads, respectively, of the front and rear tire in a third preferred embodiment of the invention.
Figures 15-a, 15-b show the main grooves that configure the drawing of the front tire tread in a first embodiment of the invention.
Figures 16-a, 16-b show the main grooves that configure the drawing of the rear tire tread in a first embodiment of the invention.
Figures 17-a, 17-b show the main grooves that configure the drawing of the front tire tread in a second embodiment of the invention.
Figures 18-a, 18-b show how the rear tire tread layout is configured in a second embodiment of the invention.
Figures 19-a, 19-b, 19-c show how the front and rear tires tread layout is configured in a third embodiment of the invention.

### Detailed description of the invention

As it is known, in order to have a good directional stability and good capacity of controlling the vehicle, the front tire must have an appropriate small width section, in relation to the rear tire, which brings about the need for a specific transversal curvature.

The extension of this transversal curvature is defined by the specific value of the relation between **ht** height - between the crown of the tread and the line that passes through borders H-H of the tread - and the distance **wt** measured along the tire chord between such axially opposed borders H-H.

This ratio is called tire curvature ratio.

The curvature ratio for front tires of motorcycles is usually higher than 0.3 and, in any case, is always higher than that for the corresponding rear tire.

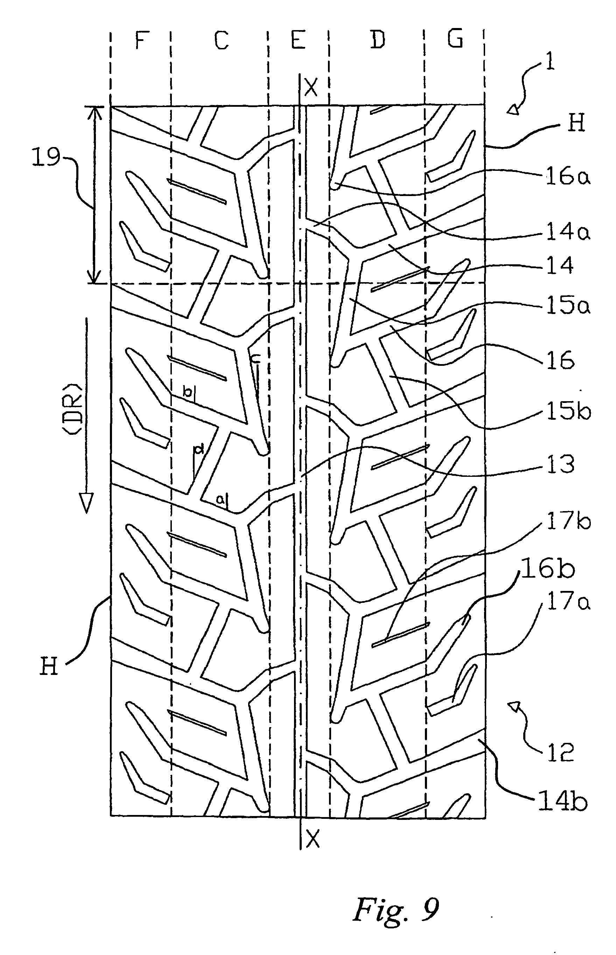

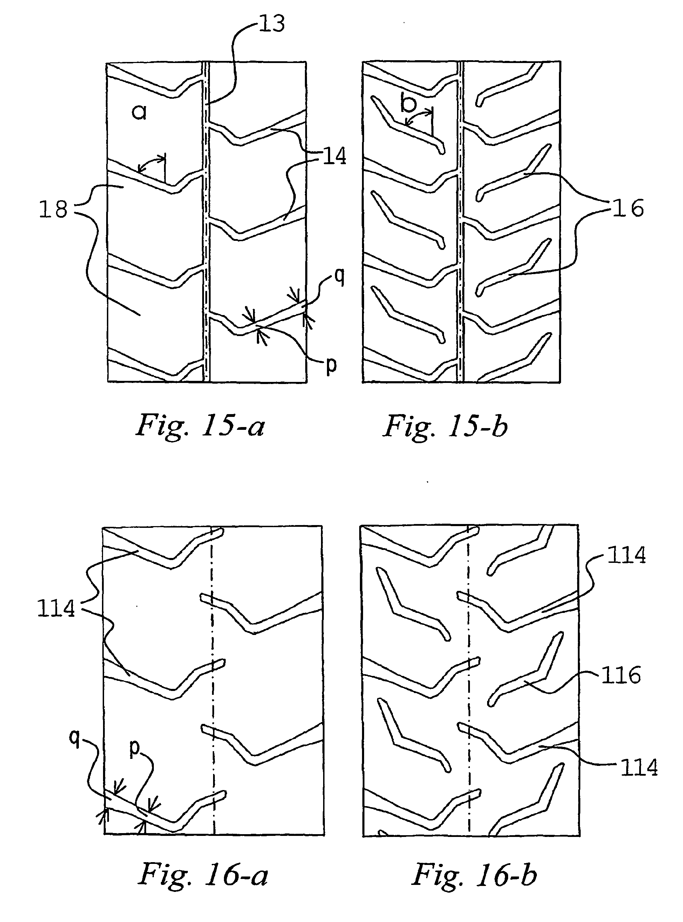

In the first preferred embodiment, shown in figures 9 and 15a, 15b the tread 12 of the front tire comprises:
a) one circumferential groove 13 extending within a central area located over the equatorial plane X-X, and
b) a first plurality of transversal grooves 14 with an axially internal end 14a located within a central area E of the tread 12 and alternatively extending towards the axially opposed projection areas G, F of tread 12, and ending on the external borders of such projection areas.

The above mentioned circumferential 13 and transversal 14 grooves define in tread 12 a plurality of rubber portions, all of them indicated by reference 18 in Figure 15-a, generally extending in a direction substantially transversal to the running direction of the tire, which is indicated by arrow DR in figure 9. In this figure and in figures 15a and 15b, a progressive increase can be observed in the width of transversal grooves 14 towards the borders, that is, the dimension q is larger than dimension p.

Preferably, the central area E of the tread 12 extends astride the X-X equatorial plane of front tire 1 and has a width from about 10% to about 25% of the axial development of the tread 12. In the example embodiment of the figure, the width of this area is of 16%.

In the preferred embodiment, in order to improve the water draining capability of front tire 1, central area E of tread 12 has a sea/land ratio between about 10% and about 30%, and the value of this ratio in the tread, shown in Figure 9, equals 26%.

Preferably, in intermediate side areas C, D of front tire 1, with a width from about 20% to about 30% of the axial development of the tread, a sea/land ratio from about 20% to about 40% is provided, and this ratio, as shown in Figure 9, equals 31 %.

Preferably, in projection areas F and G, with a width from about 10% to about 20% of the axial development of the tread, a sea/land ratio from about 10% to about 30% is provided, and this ratio is equal to 24% in the tread shown in Figure 9.

Preferably, the portions of the transversal grooves of the first set 14 located in intermediate side areas C and D form with the rolling direction DR of front tire 1, which is parallel to X-X axis, an angle a from about 50° to about 75° and more preferably, from about 60° to about 70°, this angle being equal to 67° in Figure 9.

In the first preferred embodiment shown in figures 9 and 15a, 15b the internal extremities 14a of the transversal grooves of the first set 14 are connected to the circumferential groove 13. Besides, said grooves of the first set are distributed along the tread 12 in a staggered manner, alternately in one and the other side of X-X axis.

In the tread shown in figures 9 and 15a, 15b transversal grooves 16 are X further provided, comprising a second set of grooves, forming in both sides of X-X axis, intercalated between grooves 14. Such intermediate grooves 16 have a first axially internal end 16a substantially located in the border line between the central area E and the intermediate side areas C, D, and the second axially external end 16b located in the projection area F, G of tread 12. In this second set of grooves 16, the central portion - located in the intermediate side areas C or D - forms with the rolling direction of the tire an angle b from about 50° to about 75° and, more preferably, from about 60° to about 70°, this angle being equal to 67° in Figure 9. Thus, said transversal grooves 14, 16 of the first and of the second sets formed in the tread 12 of the front tire 1 have their main central portions substantially parallel to each other. The angulation of the end portions 16a and 16b in relation to the central portion of grove 16 provides, respectively, a better water ingress and a better water exit to and from said groove. The angulation of portion 14a also facilitates the water ingress to grove 14.

With the purpose of improving the draining when in curved paths, providing a proper balance between the areas occupied by the grooves and those occupied by the rubber portions in projection areas G and F, the latter are further provided with grooves 17a, partly substantially parallel to grooves 16 and partly parallel to groove ends 16b, which improve the draining in sharp curves, when the contact patch where the tire touches the floor includes these areas. Moreover, the intermediate side areas C and D are provided with narrow slots 17b, substantially parallel to the grooves 14, the function of which is to increase the flexibility of the tire in these areas.

Further in accordance with the illustration of Figure 9, said transversal grooves are provided with branches 15a and 15b, which in the first preferred embodiment comprise bridging grooves between said transversal grooves. Such branches form with the rolling direction DR angles c and d comprised between 5° and 25°. In figure 9, these angles are equal to 9° and 23°, respectively. Such bridging grooves contribute to drain the water when the contact patch comprises areas C or D.

As shown in Figure 9, the drawing of the tread comprises a sequence of substantially identical modules 19, which are repeated along the entire circumference of the tread. Preferably, the pitch of these modules is comprised between 30mm and 150mm. In terms of circumference of the tire, the pitch of these modules is between 1/10^{th} and 1/50^{th} of such circumference.

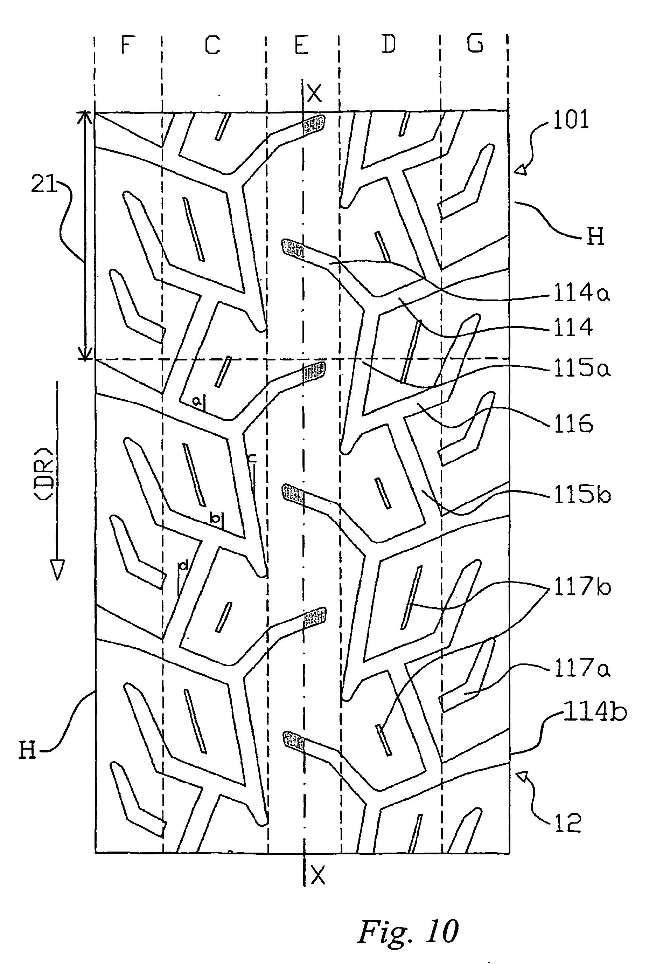

Figures 10 and 16a, 16b show the tread of the rear tire, which is used together with the front tire 1 shown in Figure 9, according to the first embodiment of the invention.

The tread of rear tire 101 shows a larger width than that of the corresponding front tire, observing in Figure 10 that the sea/land ratio inside central area E is substantially lower than that of the front tire besides being considerably smaller than in the other areas. This ratio is comprised between about 5% and 20%, and its value is equal to 10% in the example drawing in Figure 10.

In this first embodiment, tread 12 of rear tire 101 comprises a plurality of transversal grooves 114 that alternately extend from central area E to the external borders of projection areas F, G. Theses grooves have their axially internal portion 114a partially crossing such central area E, and their end (shaded portion of the figure) is located beyond X-X axis, while the external termination 114b ends on the external borders of the projection areas F and G. Figure 16-a shows that, as it occurs with the front tire, the width q of the grooves near the external border is larger than width p in the medium portion of these grooves. Further as shown by figure 10 and 16a, 16b such grooves are circumferentially staggered.

Preferably, each of such intermediate side areas C, D has a width from about 20% to 30% and, more precisely, 25% of the tread shown in Figure 10. The sea/land ratio is from about 20% to about 40% and in the example tread of the figure, it has a value equal to 33%.

As shown in Figure 10, rear tire 101 further comprises a plurality of transversal intermediate grooves 116 intercalated between grooves 114. Such intermediate grooves have their axially internal ends substantially located in the border line between the central area E and intermediate side areas C, D, the external ends ending inside projection areas F, G of tread 12.

Further as shown in the figure, as it occurs with front tire 1, rear tire 101 also has its tread provided with branches 115a, 115b of transversal grooves 114, 116 that comprise bridging grooves interconnecting such transversal grooves.

Preferably, the portions of transversal grooves 114 and 116 located in the intermediate side areas C or D form with the running direction DR of the tire angles a and b from about 50° to about 75° and, more preferably, from about 60° to about 70°, this angle be equal to 66° and 67°, respectively, in the tread shown in Figure 10.

Additionally, the tread drawing of this rear tire comprises grooves 117a and the narrow slots 117b respectively located in projection areas F, G and in the intermediate side areas C, D. The former are intended to improve the draining and curved paths, providing a proper balance between the areas occupied by grooves and those occupied by rubber portions, while slots 117b increase the flexibility of the tire along areas C and D.

A motorcycle equipped with a front tire 1 and rear tire 101, as described above, respectively, mounted on its front wheel and on its rear wheel may advantageously reach better performance both on dry and wet ground, associated to a better mileage output, better uniformity of wearing and better traction characteristics.

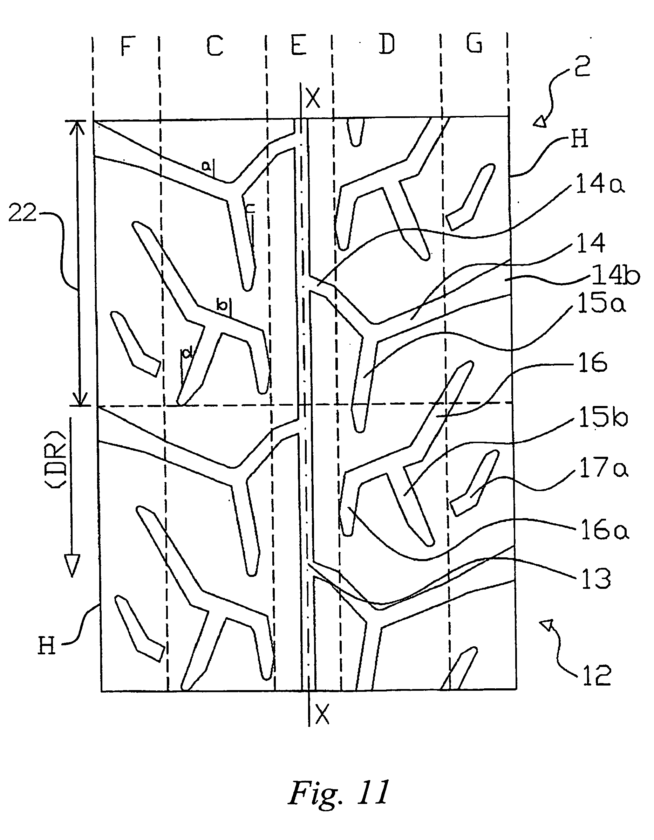

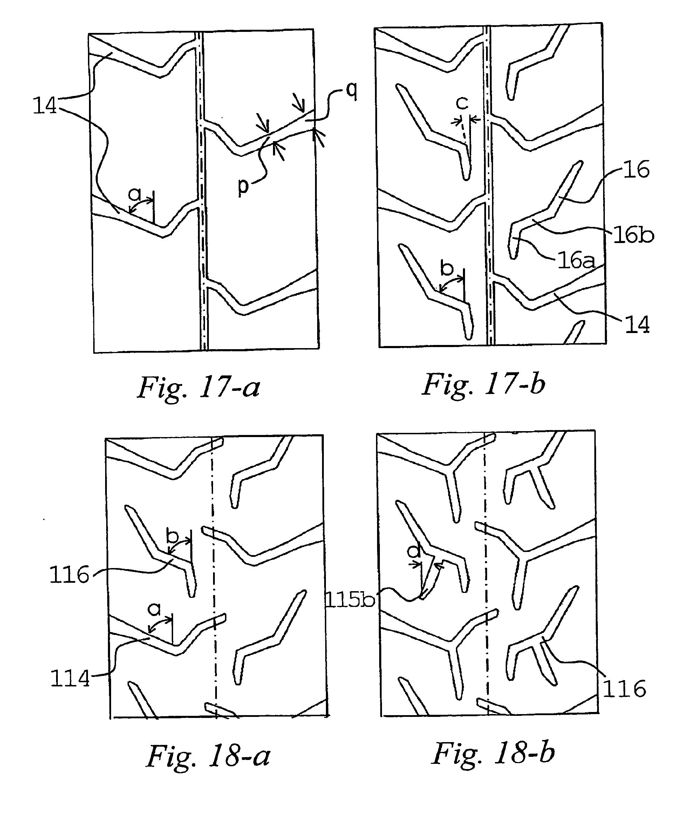

Figures 11 and 17a, 17b show the tread of the front tire according to a second embodiment of the invention. The sea/land ratios in this case are as follows:
- In the central area E, from about 10% to about 30%, and in the tread shown in Figure 11 is equal to 26%;
- in intermediate side areas C and D, from about 20% to about 40%, and this relation is equal to 3 1 % in the drawing of Figure 11;
- in projection areas F and G, from about 15% to about 25%, and its value is equal to 17% in the drawing of Figure 11;

Preferably, transversal grooves 14 form with the running direction DR of front tire 1, which is parallel to X-X axis, an angle a from about 50° to about 75° and more preferably, from about 60° to about 70°, this angle being equal to 66° in Figure 11. As with the first embodiment of the invention, the front tire is provided with a circumferential groove 13, centrally located along the X-X axis and of a plurality of transversal grooves 14, circumferentially staggered, the internal ends 14a of which are connected to said circumferential groove 13. Such transversal grooves present, in their external extremities 14b - that end on the external borders of the projection areas F and G - a width q larger than width p in its medium region as show in fig. 17-a Besides, such grooves 14 are circumferentially distributed along the tread 12 in a staggered manner.

As shown in figures 11 and 17a, 17b in the second embodiment of the invention, the tread of the front tire is provided with a set of intermediate grooves 16, intercalated between grooves 14. Such intermediate grooves are formed by three straight-line sections in zigzag 16 and 16a in the ends and 16b in the center, and it is nearly parallel to grooves 14. The internal end of section 16a is substantially located in the border line between the central area E and the intermediate side areas C or D. Section 16 has its end in the projection area (F or G, according to the band side considered).

In order to improve the water draining in the intermediate side areas, grooves 15a and 15b are provided, respectively joined to grooves 14 and 16b, and extending in a direction near that of the rolling DR, making with it an angle c of 9° and a angle d of 20°, as shown in Figures 9 and 11. Further according to these figures tread 12 is provided with grooves 17a, located in the projection area, the purpose of which is to improve the water draining when this area touches the floor, in the sharp curved paths.

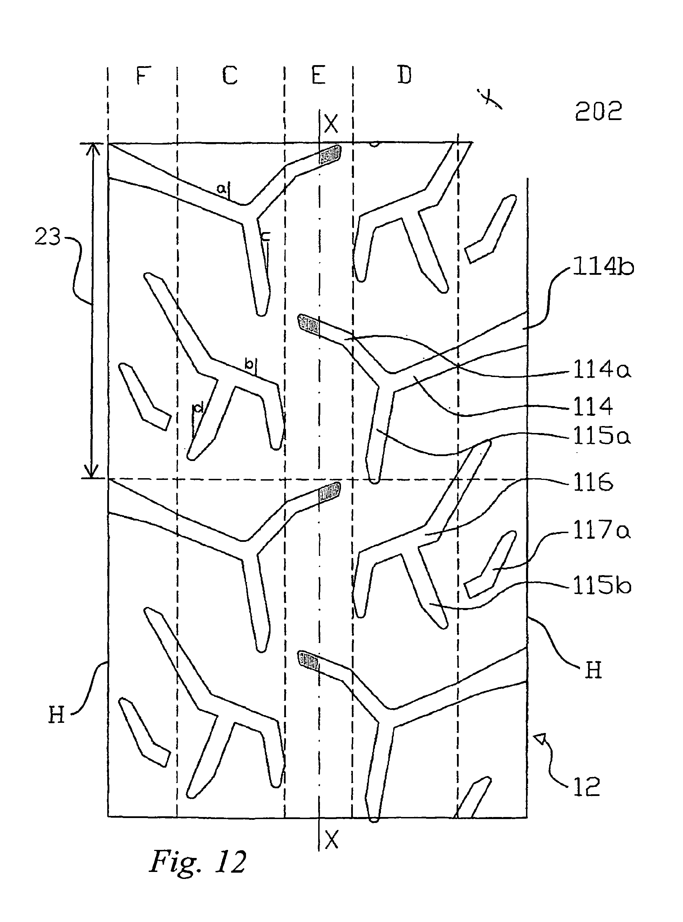

Figures 12 and 18a, 18b show the tread of the rear tire in the second embodiment of the invention. This tread differs from that of the front tire with which it forms a pair, as shown in figures 11 and 17a, 17b particularly due to the fact that it does not have a circumferential central groove 13. As a consequence of this, a higher amount of rubber results in central area E of this rear tire, which implies a smaller value in the sea/land ratio, which, in the tread shown in Figure 12 is only 7%. According to a characteristic of the invention, the internal portion of grooves 114a extends along central area E, and its end (shaded in Figure 12) is located beyond the X-X central axis. Besides helping water drainage in the contact patch with the floor, this embodiment permits to check the wear of the tread in this area.

The other elements of the tread shown in Figure 12 are similar to those shown in Figure 11, and such treads differ from each other only in the circumferential spacing between the tread layout modules, that is, dimension 23 in Figure 12 is larger than dimension 22 in Figure 11. The result of this spacing is that the rear tire, in this second embodiment, has more rubber in its tread in comparison with that of the rear tire of the first embodiment, that is, the sea/land ratio is higher in this first embodiment. Such difference may be better viewed through the comparative chart below, which is based on the specific drawings of figures 10 and 12.

| Area | Sea/land ratio in the First Embodiment | Sea/land ratio in the Second Embodiment |
|---|---|---|
| Central E | 10% | 7% |
| Intermediate Side | 33% | 23% |
| Projection | 25% | 16% |

This larger amount of rubber results in a performance comparatively more "sporting" of the pair of tires manufactured according to the second embodiment.

The treads contained in figures 11 and 12 further show that transversal grooves 14, 16, 114 and 116 are provided with branches comprising grooves 15a, 15b, 115a and 115b, forming, with DR direction or X-X angles comprised between about 5° and about 25°. In treads contained in figures 11 and 12, angles c e d of these branches are, respectively, equal to 9° and 20°. Contrarily to what happens with the tires of the first embodiment of the invention (figures 9 and 10), the branching grooves in the second embodiment of the invention do not form bridges between the surrounding transversal grooves. In other words, branching groove 15a that derives from transversal groove 14 does not reach groove 16; in a similar manner, branching groove 15b that derives from transversal groove 16 does not reach groove 14.

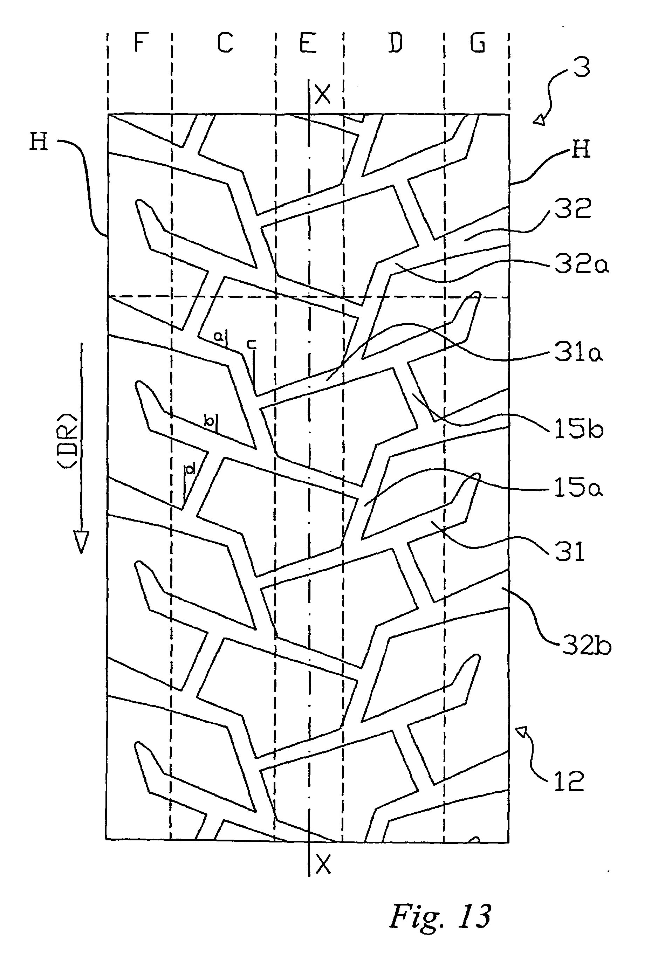

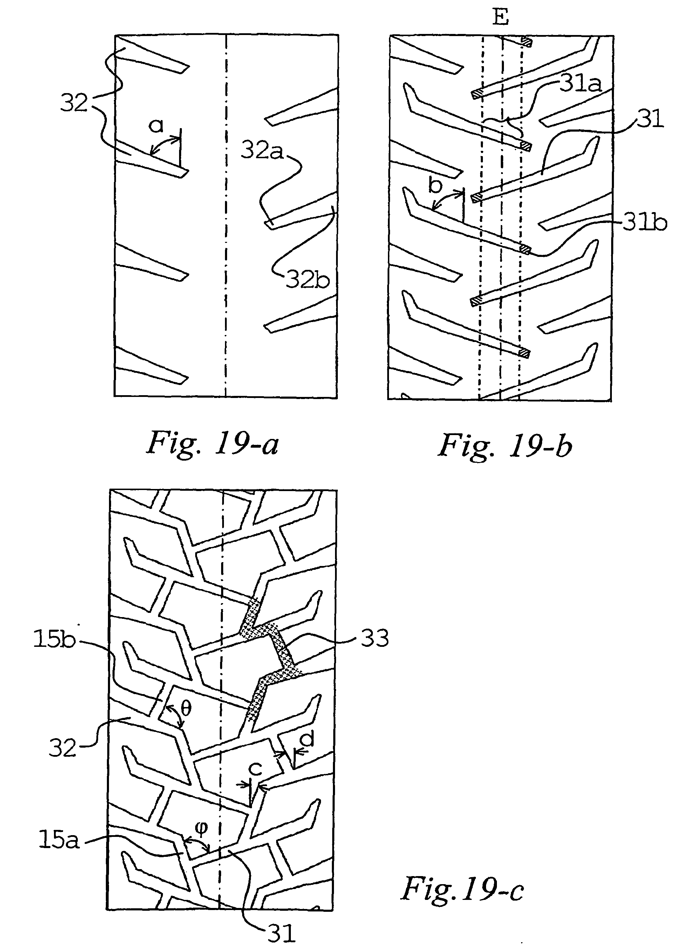

Figures 13 and 19a, 19b, 19c show the tread corresponding to the third embodiment of the invention, the characteristics of which are adequate to the traffic on unpaved floors. In this embodiment, the proportions between the elements of the drawings of tread for the front and rear tire are equal, and such drawings differ only in dimensions that are larger in the rear tire.

Due to the similarity, the sea/land proportions in the several areas of these tires are virtually identical in both tires, comprising values between 15% and 20% in central area E, between 25% and 40% in intermediate side areas C, D and between 20% and 30% in projection areas F and G.

As shown in figures 19-a, 19-b and 19-c, the drawing of the tread comprises transversal grooves 32 that have their inner end 32a in intermediate side area C, D and its outer end 32b in the external border of corresponding projection area F, G. The width of the groove in this second end 32b is larger than in such first end 32a. As shown in Figure 13 and in Figure 19-a, the upstream edge of grooves 32 makes, with the rolling direction DR, an angle preferably between about 60° and about 70°, this angle being equal to 67° in the tread shown in the picture.

The drawing of the tread further presents, intercalated between grooves 32, transversal grooves 31 that diagonally extend between projection area F, G, cross the intermediate side area C, D as well as the central area E, surpassing it entirely and ending beyond the border line between such central area and the intermediate area D or C of the opposite side. For the sake of clarity, this terminal portion is shaded in Figure 19-b. The angle between the upstream border of these grooves and rolling direction DR is, preferably, between about 60° and about 70°. In the tread shown in the figure, this value is equal to 67°.

Additionally, the treads, both in the front and in the rear tire, in this third embodiment of the invention, include branching grooves 15a and 15b, that comprise two sets of bridging grooves between such transversal grooves. Grooves 15a of the first set are located between internal ends 32a of transversal grooves 32, located at one side of the tread, and transversal grooves 31 located at the same side of the tread. Said grooves 15a, that are located in internal side areas are joined to edges 31 b of grooves 31 that begin on the opposite side of the tread. As shown in Figure 19.c, bridging grooves 15a form, with the rolling direction DR, an angle c comprising between 5° and 25°. In the figure, this angle has the value of 18°. It is further seen in Figure 19-c, that the angle ϕ between the bridging grooves 15a and the grooves 31 of the opposed side is approximately of 90°.

The second set of bridging grooves comprises grooves 15b, equally located in the intermediate side areas, joining the center of transversal grooves 32 and the first third of transversal grooves 31 of the same side of tread. As shown in the picture, the angle θ between such bridging grooves and grooves 32 is of about 90°. In this embodiment, bridging grooves 15a form, with the rolling direction DR, an angle d comprised between 5° and 25°. In the figure, this angle has the value of 23°.

It is found, therefore, that such bridging grooves form, together with a portion of the transversal grooves to which they are connected, continuous paths 33 in zigzag - one of these indicated by the shading in Figure 19-c - which extend substantially in parallel to the central axis and on both sides of it, increasing the efficiency in water drainage.

Repeated tests performed by the applicant have shown that the pairs of motorcycle tires according to the invention are capable of solving in a fully satisfactory manner the problem proposed of perfecting both the performance on moist or wet ground and the mileage output, uniformity of wearing and traction characteristics of motorcycle tires.

These results and particularly the performance improvement on wet ground may be considered fully surprising, considering that these are reached through the reduction in the rear tire of the number of grooves in the most critical area which is the central area of the tread, by reducing the number of those structural elements - the grooves - to drain the water out from the area of contact with the ground.

Obviously, those skilled in the art may introduce variations and changes to the invention described above, with the purpose of meeting specific and contingent demands, which variations and modifications are included in the scope of protection as defined by the following claims.

## Claims

1. A pair of motorcycles tires, each pair consisting of a front tire (1, 2, 3) and the corresponding rear tire (101, 202, 303), to be mounted, respectively, in the front and rear wheels of a motorcycle, said front and rear tires including a tread (B) comprising a plurality of low-relief grooves (13, 14, 15, 16, 17, 113, 114, 115, 116, 117, 31, 32, 331, 332) forming the drawing of the tread, said drawing consisting of the repetition of substantially identical modular sections (19, 21, 22, 23) which repeat along the tire circumference, said tread comprising a central area (E) encircling the equatorial plane of the tire, sided by intermediate side areas (C, D) and by projection areas (F, G), these latter adjacent to the external borders of such tread, **wherein**:
- said central area (E) has a width comprised between about 10% and about 25% of the total width of the tread;
- each of such intermediate side areas (C, D) has a width comprised between about 20% and about 30% of the total width of such tread;
- each of such projection areas (F, G) has a width comprised between about 10% and about 20% of the total width of such tread;
- the sea/land ratio in such central area (E) of the front tire (1, 2, 3) is comprised between about 15% and about 30%;
- the sea/land ratio in such central area (E) of the rear tire (101, 202, 303) is substantially lower than that of other areas (C, D, F, G) of this tire, and its value is lower than 20%;
- the sea/land ratio in intermediate side areas (C, D) of the front tire (1, 2, 3) and rear tire (101, 202, 303) is comprised between about 20% and about 40% and, in all cases and for each tire, is higher than those sea/land ratio in the central (E) and projection (F, G) areas;
- the sea/land ratio in the projection areas (F and G) of the front tire (1, 2, 3) and rear one (101, 202, 303) is comprised between about 10% and 30%;
**characterized in that**
- in the rear tire, the internal ends of at least some of said grooves surpass the X-X longitudinal axis in said central area (E).

2. Motorcycle tires, according to claim 1, **wherein** the grooves provided in the tread (1; 2; 3; 101; 202; 303) of such tires comprise transversal grooves (14; 16; 31; 114; 116; 331; 332) angularly laid out in relation to the running direction (DR) of the tire.

3. Motorcycle tires, according to claim 2, **wherein** such transversal grooves are comprised by, at least, one substantially straight section.

4. Motorcycle tires, according to claim 3, **wherein** such transversal grooves include grooves comprised by two or more substantially straight sections mutually engaged.

5. Motorcycle tires, according to claims 3 or 4, **wherein** such transversal grooves have, at least, a portion of their extension located within one of the intermediate side areas (C, D).

6. Motorcycle tires, according to claim 5, **wherein** such portion of the transversal grooves located within one of the intermediate side areas makes with the running direction (DR) of the corresponding tire an angle (a, **b)** comprised between about 50° and about 75°.

7. Motorcycle tires, according to claim 5, **wherein** the tread has a first set of transversal grooves (14, 114, 32) the external extremities of which end in the borders (H) of the tread, said grooves having at such ends a cross-section greater than that exhibited by said grooves in the side areas (C, D).

8. Motorcycle tires, according to claim 7, wherein such tread comprises a second grooves set, intermediate between the grooves of the first grooves set, and equally positioned in both sides of the X-X longitudinal axis.

9. Motorcycle tires, according to claim 8, **wherein** the grooves of said second set have a first end approximately at the borderline between the central area (E) and one of the intermediate side areas (C, D), and the second end at the projection area (F, G), without reaching its external border.

10. Motorcycle tires, according to claim 8, wherein their tread comprises a third set of transversal grooves (17a, 117a) angularly laid out and alternately positioned, said grooves being fully contained in the projection areas (F, G).

11. Motorcycle tires, according to claims 3 or 4, **wherein** such transversal grooves have branched grooves (15a, 15b, 115a, 115b), which are located in such intermediate side strips (C, D).

12. Motorcycle tires, according to claim 11, **wherein** such branched grooves (15a, 15b, 115a, 115b), make angles (**c, d)** with the running direction (DR) of the tire, comprised between about 5° and about 25°.

13. Motorcycle tires, according to claim 12, **wherein** such branched grooves form bridge connecting grooves between adjacent transversal grooves.

14. Motorcycle tires, according to claim 7, wherein the tread of the front tire comprises, at least, one circumferential groove (13) extending in the equatorial plane of the front tire within such central area E, and the internal ends of the grooves (14) comprised in said first set are joined, at least, to said at least one circumferential groove.

15. Motorcycle tires, according to claim 1, wherein the treads of the front and rear tires show similar drawings, differing only in the dimensions.

## Patentansprüche

1. Paar an Motorradreifen, wobei jedes Paar aus einem Vorderreifen (1, 2, 3) und dem entsprechenden Hinterreifen (101, 202, 303) besteht, die jeweils an den Vorder- und Hinterrädern eines Motorrads anzubringen sind, wobei die Vorder- und Hinterreifen eine Lauffläche (B) mit mehreren flachen Nuten (13, 14, 15, 16, 17, 113, 114, 115, 116, 117, 31, 32, 331, 332) aufweisen, die das Muster der Lauffläche bilden, wobei das Muster aus einer Wiederholung von im Wesentlichen identischen modularen Sektionen (19, 21, 22, 23) besteht, die sich entlang des Reifenumfangs wiederholen, wobei die Lauffläche eine zentrale Fläche (E) aufweist, welche die Äquatorebene des Reifens umschließt, an deren Seiten Zwischenseitenflächen (C, D) und Projektionsflächen (F, G) liegen, wobei letztere den äußeren Grenzen einer solchen Lauffläche benachbart sind, wobei:
- die zentrale Fläche (E) eine Breite aufweist, die im Bereich von ungefähr 10% bis ungefähr 25% der Gesamtbreite der Lauffläche liegt,
- jede solche Zwischenseitenfläche (C, D) eine Breite aufweist, die im Bereich von ungefähr 20 % bis ungefähr 30% der Gesamtbreite einer solchen Lauffläche liegt,
- jede solche Projektionsfläche (F, G) eine Breite aufweist, die im Bereich von ungefähr 10% bis ungefähr 20% der Gesamtbreite einer solchen Lauffläche liegt,
- das Hohl-/Festverhältnis einer solchen zentralen Fläche (E) des Vorderreifens (1, 2, 3) im Bereich von ungefähr 15% bis ungefähr 30% liegt,
- das Hohl-/Festverhältnis in einer solchen zentralen Fläche (E) des Hinterreifens (101, 202, 303) wesentlich niedriger ist als dasjenige von anderen Flächen (C, D, F, G) dieses Reifens und ihr Wert niedriger als 20 % liegt,
- das Hohl-/Festverhältnis in Zwischenseitenflächen (C, D) des Vorderreifens (1, 2, 3) und des Hinterreifens (101, 202, 303) im Bereich von ungefähr 20% bis ungefähr 40% liegt und es in jedem Fall und für jeden Reifen höher ist als die Hohl-/Festverhältnisse in der zentralen Fläche (E) und der Projektionsfläche (F, G),
- das Hohl-/Festverhältnis in den Projektionsflächen (F, G) des Vorderreifens (1, 2, 3) und des hinteren Reifens (101, 202, 303) im Bereich von ungefähr 10% bis 30% liegt,
**dadurch gekennzeichnet, dass**
- sich im Hinterreifen die inneren Enden von wenigstens einiger der Nuten über die X-X-Längsachse in der zentralen Fläche (E) hinweg erstrecken.

2. Motorradreifen nach Anspruch 1, bei denen die Nuten, die in der Lauffläche (1, 2, 3, 101, 202, 303) solcher Reifen vorgesehen sind, Quernuten (14, 16, 31, 114, 116, 331, 332) aufweisen, die mit einem Winkel bezüglich der Laufrichtung (DR) des Reifens vorgesehen sind.

3. Motorradreifen nach Anspruch 2, bei denen solche Quernuten durch wenigstens eine im Wesentlichen gerade Sektion aufgebaut sind.

4. Motorradreifen nach Anspruch 3, bei denen solche Quernuten Nuten aufweisen, welche aus zwei oder mehr im Wesentlichen geraden Sektionen bestehen, die miteinander im Eingriff sind.

5. Motorradreifen nach Anspruch 3 oder 4, bei denen solche Quernuten wenigstens einen Bereich ihrer Erstreckung in einer der Zwischenseitenflächen (C, D) angeordnet aufweisen.

6. Motorradreifen nach Anspruch 5, bei denen ein solcher Bereich der Quernuten, der innerhalb einer der Zwischenseitenflächen angeordnet ist, mit der Laufrichtung (DR) des entsprechenden Reifens einen Winkel (a, b) einschließt, der im Bereich von ungefähr 50° bis ungefähr 75° liegt.

7. Motorradreifen nach Anspruch 5, bei denen die Lauffläche eine erste Gruppe an Quernuten (14, 114, 32) aufweist, deren äußere Enden in den Grenzen (H) der Lauffläche enden, wobei die Nuten an solchen Enden einen Querschnitt aufweisen, der größer ist als derjenige, den die Nuten in den Seitenflächen (C, D) aufweisen.

8. Motorradreifen nach Anspruch 7, bei denen eine solche Lauffläche eine zweite Gruppe an Nuten aufweist, die zwischen den Nuten der ersten Gruppe an Nuten sind und die gleichmäßig auf beiden Seiten der X-X-Längsachse positioniert sind.

9. Motorradreifen nach Anspruch 8, bei denen die Nuten der zweiten Gruppe ein erstes Ende ungefähr an der Grenzlinie zwischen der zentralen Fläche (E) und einer Zwischenseitenfläche (C, D) aufweisen und das zweite Ende bei der Projektionsfläche (F, G) aufweisen, ohne dass sie deren äußere Grenze erreichen.

10. Motorradreifen nach Anspruch 8, bei denen ihre Laufflächen eine dritte Gruppe an Quernuten (17a, 117a) aufweisen, die mit einem Winkel vorgesehen und abwechselnd positioniert sind, wobei die Nuten vollständig in den Projektionsflächen (F, G) enthalten sind.

11. Motorradreifen nach Anspruch 3 oder 4, bei denen solche Quernuten verzweigte Nuten (15a, 15b, 115a, 115b) aufweisen, die in solchen Zwischenseitenstreifen (C, D) angeordnet sind.

12. Motorradreifen nach Anspruch 11, bei denen solche verzweigte Nuten (15a, 15b, 115a, 115b) Winkel (c, d) mit der Laufrichtung (DR) des Reifens einschließen, die im Bereich von ungefähr 5° bis ungefähr 25° liegen.

13. Motorradreifen nach Anspruch 12, bei denen solche verzweigten Nuten Brückenverbindungsnuten zwischen benachbarten Quernuten ausbilden.

14. Motorradreifen nach Anspruch 7, bei denen die Lauffläche des Vorderreifens wenigstens eine Umfangsnut (13) aufweist, die sich in der Äquatorebene des Vorderreifens innerhalb einer solchen zentralen Fläche (E) erstreckt und wobei die inneren Enden der Nuten (14), die in der ersten Gruppe enthalten sind, wenigstens mit der wenigstens einen Umfangsnut verbunden sind.

15. Motorradreifen nach Anspruch 1, bei denen die Laufflächen der Vorder- und Hinterreifen ähnliche Muster aufweisen, die sich nur in den Abmessungen unterscheiden.

## Revendications

1. Paire de pneumatiques de motocyclettes, chaque paire consistant en un pneumatique avant (1, 2, 3) et le pneumatique arrière correspondant (101, 102, 103), pour être montée, respectivement, sur les roues avant et arrière d'une motocyclette, lesdits pneumatiques avant et arrière incluant une bande de roulement (B) comprenant plusieurs rainures à bas-relief (13, 14, 15, 16, 17, 113, 114, 115, 116, 117, 31, 32, 331, 332) formant le dessin de la bande de roulement, ledit dessin consistant en la répétition de sections modulaires sensiblement identiques (19, 21, 22, 23) qui se répètent le long de la circonférence du pneumatique, ladite bande de roulement comprenant une zone centrale (E) encerclant le plan équatorial du pneumatique, bordée par des zones latérales intermédiaires (C, D) et par des zones d'épaulement (F, G), ces dernières adjacentes aux limites externes de la bande de roulement, paire dans laquelle :
- ladite zone centrale (E) a une largeur comprise entre environ 10% et environ 25% de la largeur totale de la bande de roulement ;
- chacune des zones latérales intermédiaires (C, D) a une largeur comprise entre environ 20% et environ 30% de la largeur totale de la bande de roulement ;
- chacune des zones d'épaulement (F, G) a une largeur comprise entre environ 10% et environ 20% de la largeur totale de la bande de roulement ;
- le taux creux/plein dans la zone centrale (E) du pneumatique avant (1, 2, 3) est compris entre environ 15% et environ 30% ;
- le taux creux/plein dans la zone centrale (E) du pneumatique arrière (101, 202, 303) est sensiblement inférieur à celui des autres zones (C, D, F, G) de ce pneumatique, et sa valeur est inférieure à 20% ;
- le taux creux/plein dans des zones latérales intermédiaires (C, D) du pneumatique avant (1, 2, 3) et pneumatique arrière (101, 202, 303) est compris entre environ 20% et environ 40% et, dans tous les cas et pour chaque pneumatique, est supérieur à ces taux creux/plein dans les zones centrale (E) et d'épaulement (F, G) ;
- le taux creux/plein dans les zones d'épaulement (F et G) du pneu avant (1, 2, 3) et de celui arrière (101, 202, 303) est compris entre environ 10% et 30% ;
**caractérisé en ce que**
- dans le pneu arrière, les extrémités internes d'au moins quelques unes desdites rainures dépassent l'axe longitudinal X-X dans laite zone centrale (E).

2. Pneumatiques de motocyclettes, selon la revendication 1, dans lesquels les rainures prévues dans la bande de roulement (1 ; 2 ; 3 ; 101 ; 202 ; 203) des pneumatiques comprennent des rainures transversales (14 ; 16 ; 31 ; 114 ; 116 ; 331 ; 332) disposées angulairement par rapport à la direction de déplacement (DR) du pneumatique.

3. Pneumatiques de motocyclettes, selon la revendication 2, dans lesquels les rainures transversales sont constituées par, au moins, une partie sensiblement droite.

4. Pneumatiques de motocyclettes, selon la revendication 3, dans lesquels les rainures transversales incluent des rainures constituées par deux ou plus parties sensiblement droites mutuellement reliées.

5. Pneumatiques de motocyclettes, selon les revendications 3 ou 4, dans lesquels les rainures transversales ont, au moins, une partie de leur étendue située à l'intérieur d'une des zones latérales intermédiaires (C, D).

6. Pneumatiques de motocyclettes, selon la revendication 5, dans lesquels la partie des zones transversales située à l'intérieur d'une des zones latérales intermédiaires forme avec la direction de roulement (DR) du pneumatique correspondant un angle (a, b) compris entre environ 50° et environ 75°.

7. Pneumatiques de motocyclettes, selon la revendication 5, dans lesquels la bande de roulement a un premier ensemble de rainures transversales (14, 114, 32) dont les extrémités externes se terminent dans les limites (H) de la bande de roulement, lesdites rainures ayant en ces extrémités une section transversale supérieure à celle présentée par lesdites rainures dans les zones latérales (C, D).

8. Pneumatiques de motocyclettes, selon la revendication 7, dans lesquels la bande de roulement comprend un deuxième ensemble de rainures, intermédiaire entre les rainures du premier ensemble de rainures, et positionnée également sur les deux cotés de l'axe longitudinal X-X.

9. Pneumatiques de motocyclettes, selon la revendication 8, dans lesquels les rainures dudit deuxième ensemble ont une première extrémité approximativement à la frontière entre la zone centrale (E) et une des zones latérales intermédiaires (C, D), et la deuxième extrémité en la zone d'épaulement (F, G), sans atteindre sa limite externe.

10. Pneumatiques de motocyclettes, selon la revendication 8, dans lesquels leur bande de roulement comprend un troisième ensemble de rainures transversales (17a, 117a) disposées angulairement et positionnées alternativement, lesdites rainures étant entièrement contenues dans les zones d'épaulement (F, G).

11. Pneumatiques de motocyclettes, selon les revendications 3 ou 4, dans lesquels les rainures transversales ont des rainures ramifiées (15a, 15b, 115a, 115b), qui sont situées dans les bandes latérales intermédiaires (C, D).

12. Pneumatiques de motocyclettes, selon la revendication 11, dans lesquels les rainures ramifiées (15a, 15b, 115a, 115b), forment avec la direction de déplacement (DR) du pneumatique, des angles (c, d) compris entre environ 5° et environ 25°.

13. Pneumatiques de motocyclettes, selon la revendication 12, dans lesquels les rainures ramifiées forment des rainures de liaison de pont entre des rainures transversales adjacentes.

14. Pneumatiques de motocyclettes, selon la revendication 7, dans lesquels la bande de roulement du pneumatique avant comprend, au moins, une rainure circonférentielle (13) s'étendant dans le plan équatorial du pneumatique avant dans la zone centrale (E), et les extrémités internes des rainures (14) comprises dans ledit premier ensemble sont jointes, au moins, à ladite au moins une rainure circonférentielle.

15. Pneumatiques de motocyclettes, selon la revendication 1, dans lesquels les bandes de roulement des pneumatiques avant et arrière présentent des dessins similaires, ne différant que par les dimensions.
